# EUROPEAN PATENT SPECIFICATION

(11) **EP 1 356 535 B1**
(45) Date of publication and mention of the grant of the patent: **31.05.2006**
(21) Application number: 01980209.9
(22) Date of filing: 08.11.2001
(51) Int. Cl.: H01M 8/12, C04B 35/50, H01B 1/08

(54) **CONDUCTIVE MATERIAL COMPRISING AT LEAST TWO PHASES**
LEITFÄHIGES MATERIAL MIT MINDESTENS ZWEI PHASEN
MATERIAU CONDUCTEUR COMPORTANT AU MOINS DEUX PHASES

(30) Priority: 14.11.2000 DK 200001703
(43) Date of publication of application: 29.10.2003
(73) Proprietor: FORSKNINGSCENTER RISO, 4000 Roskilde (DK)
(72) Inventor: HANSEN, Jesper, R mer, DK-2500 Valby (DK); LARSEN, Peter, Halvor, DK-4000 Roskilde (DK); MOGENSEN, Mogens, Bjerg, DK-3540 Lynge (DK); HENDRIKSEN, Peter, Vang, DK-3400 Hiller d (DK)
(74) Representative: Siiger, Joergen
(86) International application number: PCT/DK2001/000734
(87) International publication number: WO 2002/041434

(56) References cited:
- WO-A1-95/05685
- DE-A1- 19 602 176
- US-A- 4 789 561
- US-A- 6 090 500

## Description

The invention relates to an electronically conducting or mixed ionic or electronically conducting material in the form of a multiphase system comprising at least two phases.

### Technical Field

Such a material may for instance be in the form of a non-stoichiometric oxide where undesired pO₂ driven volume changes of the main phase is counterbalanced by contraction/expansion of one or more secondary phase(s) or by gradual solution/dissolution of the secondary phase in/from the main phase. Applying this principle ("counterbalancing-two-phase-principle") it is possible to achieve improved overall dimensional stability relatively to that of the main phase alone, whilst maintaining good transport properties or alternatively to improve transport properties whilst maintaining the maximum tolerable volume change in a given technological application.

This principle is generally applicable to non-stoichiometric oxides. In the following the group of alkaline earth doped lanthanum chromites is used as material Example. Lanthanum chromites are of the type III-III, where III indicates the valence. The valence seems to be of importance for the sensitivity to pO₂ with regard to volume change.

Alkaline earth doped lanthanum chromites, La₁₋ₓMaₓCr_{1-y}Mb_{y}O_{3-,} Ma = Ca, Sr, Ba and Mb = Mg exhibit good thermodynamic stability and electronic conductivity at high temperatures (800 - 1000°C). The conductivity increases with the doping concentration (Meadowcroft, D.B., Brit, J. Phys. (J. Phys. D), ser. 2, Vol 2, 1225-1233, (1969)). Due to the high conductivity and the excellent stability these materials have a range of interesting technological applications in high temperature devices.

These include interconnector material in (SOFC) Solid Oxide Fuel Cells, heating elements and electrodes in sensors and SOFC.

The crystal structure of alkaline earth doped lanthanum chromites is perovskite type, ABO₃, but symmetry and atom positions depend on doping level, doping ion and temperature. For example, La₁₋ₓ SrₓCrO_{3-δ} exhibits a phase change from orthorhombic to rhombohedral at low temperature. For pure LaCrO₃ the transition temperature is about 290°C (Diagrams 4397 and 5202 in: "Phase Diagrams for Ceramists" Vol III and Vol IV. Roth, R. S. et. al. and Levin, E.M. The American Ceramic Society, Ohio). Doping with calcium increases transition temperature but reduces the volumetric change associated with the phase transition (Sakai, N., et al., Solid State Ionics, [40/41], 394-397, (1990)). Doping with strontium reduces the transition temperature (Khattak et al., "Structural Studies of the (La, Sr)CrO₃ System", Materials Research Bulletin, 12, 1977). For La_{0.8}Sr_{0.2}CrO_{3-δ} the transition temperature is below room temperature. This is advantageous, as the volume change associated with the phase transition is generally unwanted. Hence, high doping levels are often preferred.

For use in solid oxide fuel cells the thermal expansion coefficient (TEC) of the interconnector must be close to that of the structural element of the system to prevent building up stress at the interfaces on thermal cycling. For electrolyte supported systems this element is usually yttrium-stabilised zirconia (YSZ), which has a TEC of 10.8-11.0x10⁻⁶K⁻¹(P.H. Larsen et al., "Stacking of planar SOFCs", in Proceedings 4. Int. Symp. on SOFC. Eds. M. Dokiya et al.). For anode supported systems the structural element is usually a YSZ/Ni cermet with a TEC about 12 x10⁻⁶K⁻¹ (Mori, M, et al., "Thermal Expansion of Nickel-Zirconia Anodes in Solid Oxide Fuel Cells During Fabrication and Operation", Journal of the Electrochemical Society, 145, 4, 1998). It has been shown in literature that varying doping level of alkaline earth element as well as co-doping with other elements, such as titanium, aluminium, nickel or cobalt may modify the TEC for perovskites of doped lanthanum chromites (Hiei, Y, et al., "Controlling Thermal Expansion Behaviour of Sr-Doped Lanthanum Chromites with A and Co for SOFC Separator" in Proceedings of the Third European Solid Odide Fuel Cell Forum, Nantes. Ed.: Stevens, P, European Fuel Cell Forum, 1998). As th TEC for the materials in this patent is mainly determined by the properties of the main phase the TEC of the materials according to this patent should correspondingly be modifiable by the same additives.

Alkaline earth doped lanthanum chromites expand when reduced at a constant, high temperature. This expansion is due to the simultaneous formation of oxygen vacancies and the decrease in the oxidation state of the chromium ion from +4 to +3. In an SOFC the interconnector separates the fuel from the oxidant. The interconnector material is exposed to different oxygen partial pressures regimes at either side. If the material has a high pO₂ driven volume change this may result in formation of cracks or a delamination between interconnect and electrodes. Such failure modes may be catastrophic for the stack performance, Modelling has indicated that the pO₂ driven volume change should be less than 0.05% linear change in flat plate design SOFC to prevent failing of the material (Hendriksen, P. V. et al., "Lattice expansion induced strains in solid oxide fuel cell stacks and their significance for stack integrity" in "High Temperature Electrochemistry. Ceramics and Metals" Poulsen, F.W. et al (eds.). 17th Risø International Symposium on Materials Science 1996).

In summary, high doping level of an alkaline earth element is desired in the alkaline earth doped lanthanum chromite system to provide a high conductivity, provide a thermal expansion to match the structural element and to suppress the transformation temperature below room temperature.

The problem of the pO₂ driven volume change described above for the specific example of an acceptor doped lanthanum chromite is in fact a very general one. All extrinsic electronic conductors and mixed ionic and electronic conductors are prone to such problems.

A change in oxidation state of the cations in the lattice is associated with a change of size of the ions and thus in general with a change in unit cell volume. Thus, if the required pO₂ window of operation for a specific technological application of a material includes the pO₂ interval, where the cations of the material may change oxidation state the material will experience volume changes. These volume changes may or may not be problematic, depending on the conditions (important conditions being magnitude of the volume change, the mechanical boundary conditions, and the mechanical strength of the material.) In all applications where high electronic conductivity is required, one of the elements must be present in multiple oxidation states. As the minority species (of the different oxidation states) limits the conductivity, the minority species should be present in a significant amount. The larger the required pO₂ interval of operation, the more difficult it becomes to fulfil the requirement of coexistence of multiple oxidation states (and significant amount of the minority species) without experiencing a change in their relative concentration over the pO₂ interval, which causes the undesired volume change.

For all non-stoichiometrip oxides, such as perovskites, flourites, pyrochlors, Brownmillerites and Ruddlesden-Popper crystal systems, where transport properties are important, the pO₂ driven volume change will be present potentially posing a problem.

Ce(Sm)O₂ is a specific example of a mixed electronic and ionic conducting flourite. When the oxygen partial pressure is reduced this material will expand similarly to what is observed in La(Sr)CrO₃ (H. M. Williams et al. In Proceedings of the 2^{nd} European Solid Oxide Fuel Cell Forum. Ed.: B. Thorstensen, 783-792, 2, 1996). Modification of the composition to introduce a suitable secondary phase may solve the expansion problem.
For the chosen material example system, the pO₂ driven volume changes may, as demonstrated in the following, be partly counterbalanced by introducing vanadium rich secondary phases.

### Background Art

WO 95/05685 illustrates a material of the composition La_{0.8}Sr_{0.2}Cr_{0.97}V_{0.03}O₃, more generally a material of the composition La_{0.8}Sr_{0.2}CrO₃ where some of the Cr-atoms have been substituted by V-atoms acting as a sintering aid.

During the preparation of this material secondary phases have been observed. However, theses secondary phases disappear again during sintering. The reason is that added in the right amount the V atoms are absorbed in the crystal structure.

According to the same principle, vanadium has also been added as sintering aid in the form of Sr₃(VO₄)₂ to La₁₋ₓSrₓCrO₃ compounds (Simner, S.P., Solid State Ionics [128], 53-63, 2000). However, adding of 5-10 wt-% Sr₃(VO₄)₂ to La_{0.85}Sr_{0.15}CrO₃ did not improve the pO₂ driven volume change. Assuming Sr₃(VO₄)₂ enters into the perovskite phase, ABO₃, addition of Sr₃(VO₄)₂ leads to A site excess, contrary to the present invention, where an excess of B-sites is favourable. Furthermore, an excess of A-sites may lead to formation of A-oxides or hydroxides which may lead to disintegration of the material.

Another example of using additive to enhance liquid phase sintering is described in WO 92/12929 (Cipollini, NE., WO 92/12929). The additive is Bi₂O₃. WO 92/12929 includes Ca- and Mg-doped lanthanum chromites. Effects on the pO₂ driven volume change has not been reported.

Systems including multiple phases have been utilised in interconnectors as described in WO 98/40921 (Diekmann, U., WO 98/40921), where an inert glass ceramic phase was introduced. However, contrary to the present invention the secondary phases neither influence the redox properties of the system nor do the phases interact chemically.

### Brief Description of the Invention

The object of the invention is to provide a material of the above-mentioned type which is more sturdy than hitherto known. Specifically for interconnectors in solid oxide fuel cells this is of importance.

According to the invention there has been provided an electronically conducting or mixed ionic and electronically conducting material in the form of a multi-phase system comprising at least two phases, characterised by the multiphase system comprising a main phase of non-stochiometric oxide of, for instance alkaline earth doped lanthanum chromite (a material of the type III-III) and one or more secondary phases, which changes phase in response to the oxygen partial pressure, said main phase being a perovskite phase and consisting of La₁₋ₓMaₓM_{1-y} V_{y+r}O_{3±δ}, where Ma is Sr and M is one or more elements belonging to the transition metals like e.g. Sc, Ti, V, Mn, Cr, Fe, Co, Ni, Cu, Zn, Y, Zr, Nb, Mo, Ru Rh, Hf, Ta, W, Re and Os as well as Mg, Al, Ga, In, Ge, Sn, Pb, Bi and Sb, 0.3 > x > y,r > 0.03 and y < 0.3, and said secondary phases for instance consisting of combinations of V, Sr, La and Cr.

The secondary phases are usually formed by addition or doping with an element above the solubility limit, where single-phase solid solutions cannot be formed. A secondary phase may work through a change in the solubility of the elements of the secondary phases with the oxygen partial pressure (yielding a precipitation/reabsorbtion effect), through a phase transition with the oxygen partial pressure or by a combination of a change in solubility and a phase transition. For all cases, it is a demand that the density changes with the oxygen partial pressure. If an expansion of the main phase is counterbalanced, the secondary phases should change to a more dense modification. If a contraction of the main phase is counterbalanced, the secondary phases should change to lesser dense modifications.

The material according to the invention is characterised by having one or more secondary phases that counterbalance the pO₂ driven volume change of the main phase during reduction and consists of a main phase of non-stoichiometric oxide of for instance alkaline earth doped lanthanum chromite (a material of the type III-III) and one or more secondary phases which changes phase in the oxygen partial pressure range of the application, said secondary phases for instance consisting of combinations of V, Sr, La or Cr. During reduction the secondary phase(s) will either decompose and be incorporated into the main phase or form another phase with different density - possibly of the perovskite type. Since the perovskite phase has a higher packing density of the ions than most other phases the disappearance of non-perovskite secondary phases will lead to a contraction by reduction of the oxygen partial pressure.

According to the invention the secondary phase may be optimised by means of one or more oxides of elements such as V, Nb, Ta, Cr, Mo, W, Bi, Sb, Fb, Mg, Sr, Ca, Ba, Zr, Sn, Fe, Y, Sc, Cu, Zn, Nd or other rare earth elements.

The material according to the invention may for instance be used as a SOFC interconnector.

### Brief Description of the Drawing

The invention will be described with reference to the following drawings, in which
Fig 1 shows the high temperature X-ray powder diffraction patterns of a sample with composition 209016 measured at 1000°C in air and in reducing atmosphere (pO₂ = 6x10⁻¹⁷ atm). P marks Perovskite peaks and X marks the non-perovskite peaks.
Fig 2 illustrates the conductivity vs. the oxygen partial pressure for samples with compositions 209016, 159016, 109508 and 159508.
Fig 3 illustrates the conductivity of a sample with composition 109508 vs. time after a step in partial oxygen pressure. Legends indicate partial pressure of oxygen for the experiments.
Fig 4 shows the cyclic voltametry on a sample with composition 209016 corrected for oxygen evolution/removal in gas-phase of sample chamber.
Fig 5 illustrates the expansion as a function of temperature measured by dilatometry in air for samples with compositions 209016 and 159016. The arrow indicates the abrupt expansion of a sample with composition 159016.
Fig 6 shows a Differential Scanning Calorimetry for a sample with composition 209016.
Fig 7 shows the pO₂ driven volume change vs. the oxygen partial pressure at 1000°C for samples of the compositions 209016, 159016, 109508 and 159508.
Fig 8 indicates the oxygen loss vs. the oxygen partial pressure. Measured by thermogravimetry for a sample of the composition 209016.

### Best Mode for Carrying out the Invention

### Examples:

In the following Examples, the nominal compositions of the materials are for simplicity expressed as chemical formulas. There lies no postulate of a single phase material behind this notation.

The perovskite structure represents a dense packing of the ions with no room for interstitial oxygen ions. Therefore '+δ' in the formulas for the materials indicate formation of other, less dense phases than the perovskite rather than interstitial oxygen ions. The multi-phase system is generated directly without mixing of separately prepared ceramic powders.

The multi-phase systems consisting of V, Sr, La and Cr exhibit good TEC match to YSZ. Furthermore, the secondary phases of the above-mentioned types are relatively well conducting and the presence of small amounts of these phases is therefore not detrimental to the overall conductivity of the material.

In general, the use of a multi-phase system rather than a single-phase system increases the degrees of freedom and provides additional means for optimising the properties of the material.

In the introduction a design criterion of less than 0.05 % linear isotherm expansion was given (Hendriksen, P. V. et al. , "Lattice expansion induced strains in solid oxide fuel cell stacks and their significance for stack integrity" in "High Temperature Electrochemistry: Ceramics and Metals" Poulsen, F.W. et al (eds.). 17th Risø International Symposium on Materials Science 1996). This value refers to single phase chromite interconnects exhibiting a pO₂ driven volume change by reduction. The multi-phase systems exhibit contraction at slightly reducing conditions and expansion on strongly reducing conditions (see below). In a solid oxide fuel cell of flat plate design the interconnector is kept flat, and the pO₂ driven volume change will result in internal stresses in the interconnector. The highest tensile stress is on the surface at the air side of the single phase interconnector contrary to the present invention where the small contraction between an oxygen partial pressure of about 0.2 atm and about 10⁻³ atm will tend to move the point of maximum tensile stress inward from the surface. If the contraction is sufficiently high compared to the expansion at low oxygen partial pressure, the air side surface may even experience a compression. Since cracks are usually initiated from imperfections at the surface, this situation is highly desirable and reduces the risk of failure during operating conditions in a solid oxide fuel cell.

A fair comparison between the properties of the here developed materials and the state of the art materials must be made between materials of similar conductivity. Mori et al. (Mori, M., Yamamoto, T., Itoh and H., Watanabe, Journal of Materials Science, 32, 2423 - 2431, 1997) have measured the conductivity of La_{0.8}Sr_{0.2}CrO_{3-δ} as a function of oxygen partial pressure and also when the material is placed in a pO₂ gradient. The conductivity measured in the gradient equals the conductivity measured at the low pO₂ indicating that effectively all the material in the sample is in a reduced form. This shows that as to applications, such as SOFC interconnects, where the material is placed in a pO₂ gradient, the important property is the conductivity at a low pO₂.

The conductivity at pO₂ ^{~}10^{-16.5} atm. (1000°C) for the developed materials is about 10 S/cm. To achieve a comparable conductivity for a purely Sr-doped (single-phase) material one would need a degree of doping of approximately 15 %. The pO₂ driven volume change of La_{0.85}Sr_{0.15}CrO_{3-δ} at pO₂ ^{~}10^{-16.5} atm. (1000°C) is about 0.13 % linear change. The pO₂ driven volume change on the same conditions for the developed two-phase materials is between +0.02 % linear change and ÷0.055 % linear change (samples of compositions 109508 and 259016, respectively). Introduction of suitable secondary phases thus reduces the dimension change to about a third of the one for the single-phase material of comparable conductivity.

### Example 1:

Experimental evidences that secondary phases appear and are re-absorbed due to changes in partial pressure of oxygen.

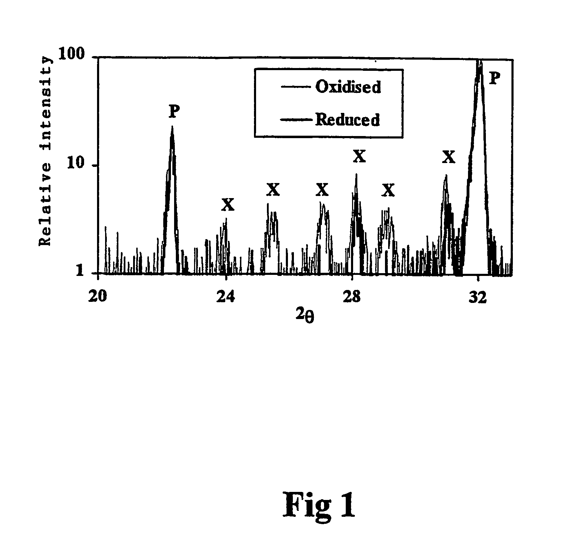

High temperature X-ray powder diffraction of a sintered sample with composition 209016 was measured in air and reducing atmosphere (pO₂ = 6x10⁻¹⁷atm.) at 1000°C by means of a STOE Powder Diffractometer. In Fig 1, the diffraction patterns are illustrated. A comparison of the two patterns shows that the amount of secondary phase (non-perovskite) decreases significantly when the sample is reduced. This is evident considering the secondary phase peaks at 2θ = 24.0°, 25.5°, 27.1° and 29.1°, that disappear due to reduction.

The active secondary phases may be rich in vanadium and strontium or lanthanum and may typically be of the type Ae(Ln)V(Tm)O_{4-δ} or Ln(Sr)V(Tm)O_{4-δ}.

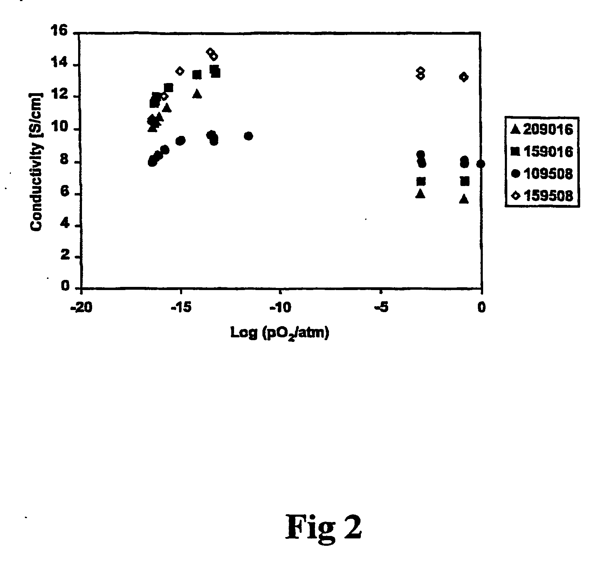

Considering again a sample with composition 209016, it is observed that in Fig 2 the conductivity increases when the sample is reduced from air to about pO₂ = 10^{- 13}atm and conductivity slightly decreases at more reducing conditions. The initial increase in conductivity may be explained by the dissolution of the strontium rich secondary phases into the perovskite phase leading to an increase in the effective doping level of strontium in the perovskite and thereby an increase in the concentration of Cr IV, which determines the conduction. The subsequent decrease is due to reduction of chromium 4 + to chromium 3+ in the perovskite phase. Conventional single-phase chromites do not exhibit the described increase in conductivity during reduction but only the decrease due to the chromium reduction (Yasuda, I. , et al., J. Electrochem. Soc., [140], 6, 1699-1704, (1993)).

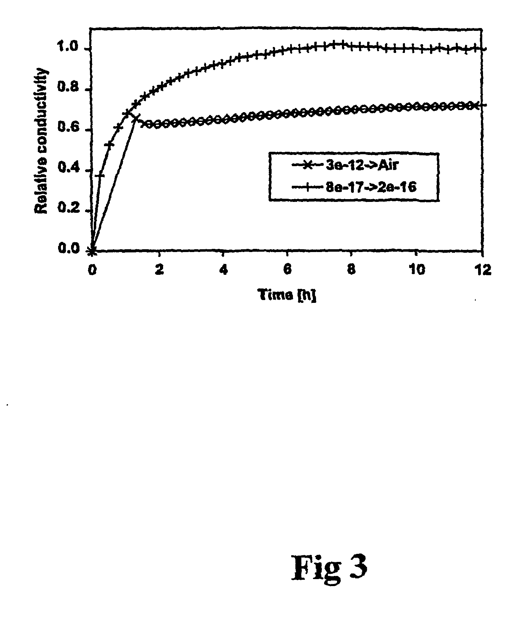

In Fig 3, the relative conductivity of a sample with composition 109508 is plotted vs. time after a change in partial pressure of oxygen. It is observed that the experiment conducted in reducing atmosphere reaches a new equilibrium within 6-8 hours, whereas for the experiment involving both reducing and oxidising atmosphere conductivity changes over several days. For the latter experiment, the conductivity seems to change in two stages. This further indicates that segregation of secondary phases is involved. The segregation of secondary phases takes place via cation diffusion and a conductivity response to this is therefore much slower than the response from changes in cation oxidation states controlled by oxygen diffusion.

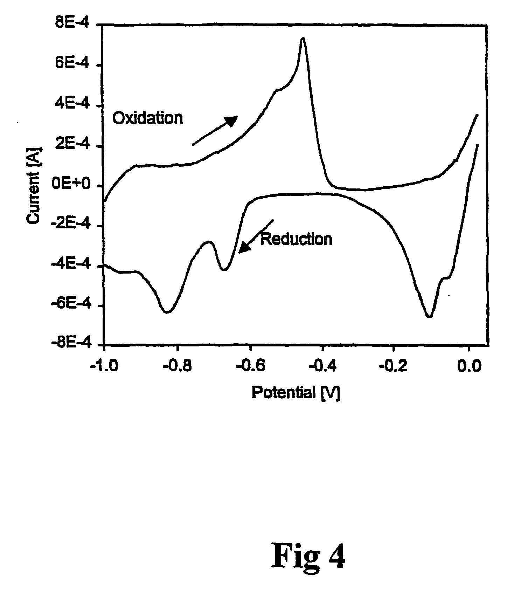

Variations in oxygen content of the 209016 were investigated by cyclic voltametry at 1000°C (see Fig 4). It was observed that the redox process consists of several steps, as several peaks appear by oxidation and reduction sweeps. Reduction and oxidation peaks are not symmetrical. This indicates that the formation of phases may depend on a nucleation process. Quantification of the peaks indicates that the oxygen removal between 0.03→ ÷ 0.2V by reduction correspond to a change in oxidation state of 1 of the excess cation ([Cr]+[V]-1). The two peaks at about ÷0.66 and ÷0.82 are due to changes in oxidation states associated with absorption into the perovskite phase or to the formation of other secondary phases. By oxidation, the peaks at about ÷0.7→ ÷ 0.38V are probably related to the formation of secondary phases. Oxygen corresponding to the removal between 0.03 → ÷ 0.2V by reduction is incorporated during the resting time at high oxygen partial pressure.

### Example 2:

A nominal composition 209016 was used.

The materials specified in the Examples were prepared by the glycine/nitrate powder synthesis method (Chick, L.A., Bates, J.L., Pederson, L.R., and Kissinger, H.E. Proceedings of the 1^{st} International Symposium of Solid Oxide Fuel Cells. The Electrochemical Society, Proceedings Vol. 89-11, 1998. p. 170-187) as exemplified in the following:

Aqueous solutions of Sr(NO₃)₂ (0.1621g Sr/g solution) denoted Sr-solution, La(NO₃)₃,6H₂O (0.1986g La/g solution) denoted La-solution and Cr(NO₃)₃,9H₂O (0.08786g Cr/g solution) denoted Cr-solution were prepared and calibrated by heating to 850 °C for 8h and measuring the weight of residual oxide.

Vanadium was stabilised in aqueous solution by complexing with citric acid: 15.003-9g V₂O₅ and 61.5g citric acid were dissolved in 184.2g H₂O by heating. This resulted in a solution with a concentration of 0.02874g V/g solution. This solution is denoted V-solution.

The material was prepared from 55.959g La solution, 10.810g Sr solution, 53.263g Cr solution, 17.727g V solution and 22.664g glycine.

The aqueous solutions of metal nitrates were mixed to the desired stoichiometry. Glycine was dissolved in the mixture to give a concentration of 0.548 moles of glycine pr. mole nitrate-group. During heating, water was removed from the solution by evaporation to form a gel. By further heating, the gel ignites and burns to form a ceramic nano-powder. The powder is collected and calcined for 2 hours at 1000°C.

Other synthesis methods, such as the mixed oxide route (solid state reaction between oxides and carbonates), the Pechini method (Pechini, M.P., US Patent 3,330697 (1967)) or sol-gel synthesis (Chen, C.H., Kruidhof, H., Bouwmeester, H.J.M. and Burggraaf, A.J. Materials Science and Engineering B39 (1996) 129-132) are also suitable.

Calcined powder was pre-pressed uniaxially at about 1000kg/cm² followed by isostatic pressing at about 3300kg/cm². The pressed samples were placed in alumina crucibles and sintered in air at 1520°C for 5 hours. Table 1 contains a list of the prepared samples and geometrical densities.

**Table 1: Samples and densities.**

| Nominal composition | Sr-content [site- %] | Cr-content [site- %] | V-content [site- %] | Sintered density [g/cm³] |
|---|---|---|---|---|
| 109508 | 10 | 95 | 8 | 6.26 |
| 159016 | 15 | 90 | 16 | 6.19 |
| 159508 | 15 | 95 | 8 | 6.38 |
| 209016 | 20 | 90 | 16 | 6.12 |
| 259016 | 25 | 90 | 16 | 5.71 |

Conductivity was measured at temperatures from 800°C to 1000°C in air. The conductivity varied from 4.23S/cm at 800°C to 5.69S/cm 1000°C. At 1000°C, the conductivity was measured in oxygen partial pressures from 0.21 atm. to 10⁻¹⁷ atm. In Fig 2, the conductivity is plotted vs. oxygen partial pressure. The conductivity at 10-¹⁶ atm is 10.8 S/cm.

It was demonstrated that the same conductivity may be obtained in air after multiple redox-cycles, i.e. the pO₂ driven solution/precipitation reactions are reversible.

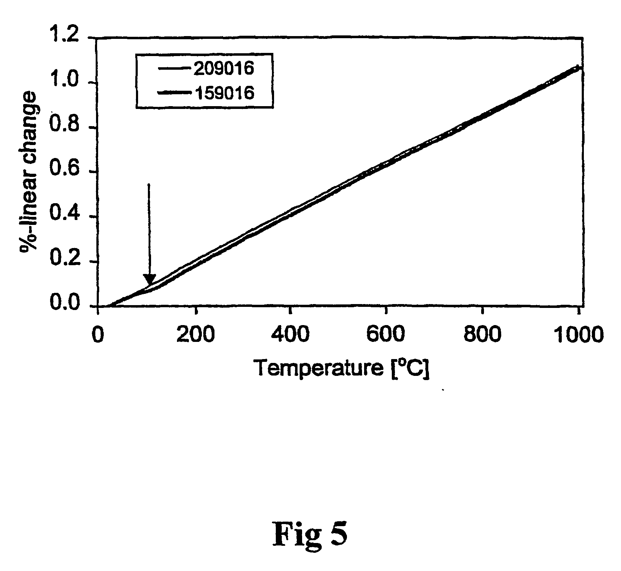

The thermal expansion was measured by dilatometry in air between 25 °C and 1000°C with a heating rate of 5 °C/min. In Fig 5, the expansion vs. temperature is plotted. The thermal expansion coefficient, TEC, was 11.1x10⁻⁶K⁻¹.

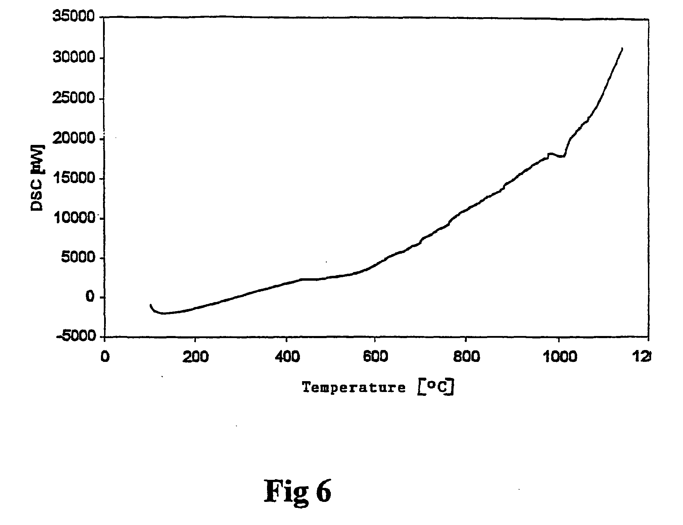

The dilatometry measurements indicate that there are no phase transitions in the main phase as no abrupt contraction is observed in Fig 5. Differential Scanning Calorimetry, DSC, further confirmed this as no endotherm was observed between room temperature and 1000°C (see Fig 6). However, DSC indicated a phase transition at about 1004 ° C . Dilatometry measurements were only performed up to 1000 ° C, and the high temperature transition was not observed.

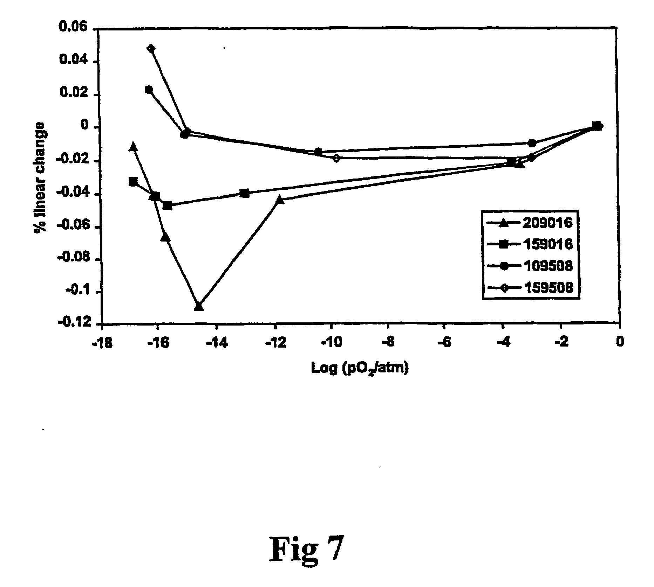

The pO₂ driven volume change was measured by dilatometry at 1000°C for oxygen partial pressure between 0.21 atm. and 10⁻¹⁷atm. In Fig 7, the expansion is plotted vs. oxygen partial pressure at 1000°C. The pO₂ driven volume change from air to 10⁻¹⁶atm corresponded to about ÷ 0.05 % linear change. Note that a contraction takes place during mild reduction. In Fig 7, it can be observed that the contraction was greatest for oxygen partial pressures around 10⁻¹⁴ - 10⁻¹⁵ atm. Under these conditions, the pO₂ driven volume change corresponded to about ÷0.11% linear change.

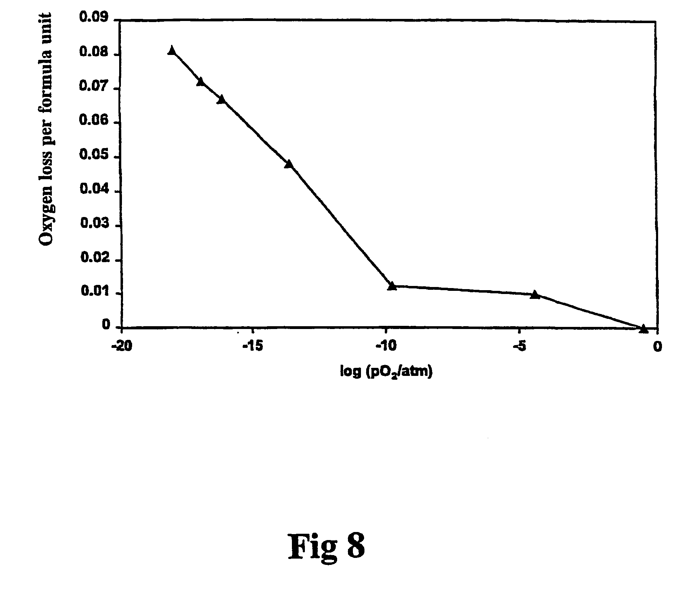

Thermogravimetry was measured at 1000°C with an oxygen partial pressure between 0.21 atm and 10⁻¹⁷atm. (see Fig 8). The weight loss on reduction is due to loss of oxygen when the oxidation states of cations are decreased in some cases followed by changes in phase distribution. Vanadium is expected to be in oxidation state +4 within the perovskite. The loss of oxygen indicated that some of the vanadium changed oxidation state during the reduction.

### Example 3:

A nominal composition 159016 was used.

The material was prepared from 59.451g La-solution, 8.109g Sr-solution, 53.258g Cr-solution, 17.724g V-solution and 22.837g glycine. The mixture was reacted, calcined and sintered as described in Example 2.

The conductivity varied from 6.05 S/cm at 800°C to 6.79 S/cm 1000° in air. In Fig 2, conductivity at 1000°C is plotted vs. oxygen partial pressure. The conductivity at 10⁻¹⁶ atm is estimated to 12.2 S/cm.

The thermal expansion coefficient, TEC, was measured in air between 25 °C and 1000°C by dilatometry. The thermal expansion coefficient was 10.9x10-6K⁻¹.

The dilatometry indicated a phase transition at about 90 ° C in the main phase (cf Fig 5).

The pO₂ driven volume change was measured at 1000°C for oxygen partial pressure between 0.21 atm. and 10⁻¹⁷atm. In Fig 7, the expansion is plotted vs. oxygen partial pressure at 1000°C. The pO₂ driven volume change from air to 10⁻¹⁶ atm was about ÷0.042% linear change.

### Example 4:

A nominal composition 109508 was used.

The material was prepared from 62.951g La solution, 5.405g Sr solution, 56.231g Cr solution, 8.862g V solution and 23.657g glycine. The mixture was reacted, calcined and sintered as described in Example 2.

Experimental results are stated in Table 2.

**Table 2: Summary of experimental results.**

| ID | Conductivity 1000°C Air | Conductivity 1000°C 10⁻¹⁶atm | TEC 25°C-1000°C Air | pO₂ driven volume change- 1000°C Air → 10⁻¹⁶atm |
|---|---|---|---|---|
| 109508 | 8.0S/cm | 8.5 S/cm | 10.3x10⁻⁶K⁻¹ * | +0.020% linear change |
| 159016 | 6.8S/cm | 12.25/cm | 10.9x10⁻⁶K⁻¹ ** | -0.042% linear change |
| 159508 | 13.2S/cm | 11.6S/cm | 10.8x10⁻⁶K⁻¹ | +0.045% linear change |
| 209016 | 5.75/cm | 10.85/cm | 11.1x10⁻⁶K⁻¹ | -0.050% linear change |
| 259016 | 8.2S/cm | 11.5S/cm | 11.4x10⁻⁶K⁻¹ | -0.055% linear change |

| | | | | |
|---|---|---|---|---|
| * Phase transition at 80 - 100°C. | | | | |
| ** Phase transition at about 90°C. | | | | |

Conductivity tests over several oxidation cycles indicate that conductivity during reducing conditions is highly reproducible, and that conductivity under oxidising conditions where the slow evolution of secondary phases takes place, remains higher than 7.8S/cm.

### Example 5:

A nominal composition 159508 was used.

The material was prepared from 59.454g La solution, 8.105g Sr solution, 56.226g Cr solution, 8.869g V solution and 23.454g glycine. The mixture was reacted, calcined and sintered as described in Example 2.

Experimental results are stated in Table 2.

### Example 6:

A mominal composition 259016 was used.

The material was prepared from 52.451g La solution, 13.518g Sr solution, 53.264g Cr solution, 17.724g V solution and 22.429g glycine. The mixture was reacted, calcined and sintered as described in Example 2.

Experimental results are stated in Table 2.

### Example 7:

### Tailoring of properties.

By analysing the results in Fig 7, it may be observed that the contraction between air and slightly reducing conditions (about 10⁻¹⁵ atm for samples with compositions 209016, and 159016, and about 10⁻¹² atm for samples with compositions 109508 and 159508) increases with increasing vanadium content. Furthermore, the pO₂ driven volume change from the most contracted state increases with increasing strontium content. It should therefore be possible to optimise the composition to the desired expansion behaviour. Specifically, it should be possible to produce a material with zero expansion. According to Table 2, this should hold between 8-16 site-% vanadium. From Fig 2 it may be concluded that the optimisation of expansion properties may be performed without deteriorating the conductivity of the material.

### Example 8:

### Generalisation of the A-site cation in the perovskite system

The problem of pO₂ driven volume change described above for the specific Example of acceptor doped lanthanum chromite is in fact a very general one. All extrinsic electronic conductors and mixed ionic and electronic conductors are prone to such problems. One Example of such materials is the ABO₃ perovskites.

The perovskite structure provides wide possibilities for variation of the A and the B cation as well as the doping ion of the main phase in the multi-phase system. The ionic radius of the A-site cation should be close to that of oxygen. The A-site compositions, which are likely to form systems equivalent to the La(Sr)Cr(V)O₃-system, may for instance be one element or a combination of elements belonging to the lanthanides including Ce, Pr, Nd, Pm, Sm, Eu, Gd, Tb, Dy, Ho, Er, Tm, Yb and Lu, the alkaline elements including Na and K, the alkaline earth elements including Ca, Sr and Ba as well as selected transition elements including La and Y.

The multi-phase system may for instance have a nominal composition LOCr_{1- y}V_{y+r}O_{3±δ}, where L0 is chosen according to the list of elements above. An Example of this is the system Nd_{0.8}Rr_{0.2}Cr_{0.95}V_{0.1}O_{3±δ}. Neodymium may take part in the formation of the secondary phases in a modification of NdVOₓ.

### Example 9:

### Generalisation of the B-site cation in the perovskite system

The B-site cation in the perovskite ABO₃ system may be changed by a number of elements to form a main phase capable of making a multi-phase system with active secondary phase. The B-site may for instance be one or a combination of elements belonging to the transition metals, such as Sc, Ti, V, Mn, Fe, Co, Ni, Cu, Zn, Y, Zr, Nb, Mo, Ru, Rh, Hf, Ta, W, Re and Os as well as Mg, Al, Ga, In, Ge, Sn, Pb, Bi and Sb.

An Example of a multi-phase system composed of this series is La₁₋ₓSrₓFe_{1-y- z}V_{y+r}O_{3±δ}.

### Example 10:

It is very likely that the elements V, Nb, Ta, Bi, Sb, Mn, Fe, Co, Ti, Cr, Mo, W, Sn and Pb will be active in formation of secondary phases with the desired properties, since they are likely to exist in higher oxidation states than 3 + as well as in oxidation state 3 +. Moreover, most of the elements mentioned in Example 9 should be capable of forming of secondary phases, which exhibit varying solubility with a change in the oxygen partial pressure in the right main phase.

### Example 11:

The use as interconnector material between single cells in a solid oxide fuel cell stack.

A composition of La_{0.88}Sr_{0.12}Cr_{0.92}V_{0.12}O₃ is manufactured by the glycine nitrate powder method as described in Example 2. After calcination at 1000°C for 2 hours, the powder is mixed with 2 w/o paraffin wax. Plates of the desired dimension are manufactured by uni-axial pressing at 400kg/cm² and subsequently sintered at 1450°C for 2 hours.

### Example 12:

The use as interconnector material between single cells in a solid oxide fuel cell stack.

A composition of La_{0.88}Sr_{0.14}Cr_{0.92}Cr_{0.14}O₃ is manufactured by the glycine nitrate powder method as described in Example 2. After calcination at 1000°C for 2 hours, the powder is mixed with 2 w/o paraffin wax. Plates of the desired dimension are manufactured by uni-axial pressing at 400kg/cm²and subsequently sintered at 1550°C for 2 hours.

### Example 13:

For the use as interconnector material between single cells in a solid oxide fuel cell stack.

A composition of La_{0.88}Sr_{0.14}Cr_{0.92}Cr_{0.14}O₃ is manufactured by the glycine nitrate powder method as described in Example 2. The multi-phase powder is suspended in an organic system based on methyl ethyl ketone and ethanol as solvent and polyvinylpyrrlidone (PVP) and polyvinylbutyral (PVB) as dispersing agent and binder, respectively. The suspension is subsequently cast onto a moving substrate and allowed to dry. Sheets in appropriate sizes are cut and sintered at 1500°C for 4 hours. The manufacture of sheets by viscous processing techniques, such as calendering will also be suitable.

### Example 14:

For the use as interconnector material between single cells in a solid oxide fuel cell stack.

A composition of La_{0.8}Sr_{0.2}Cr_{0.95} Ta_{0.05}O₃ is manufactured by the glycine nitrate powder method as described in Example 2. The multi-phase powder is suspended in an organic system based on methyl ethyl ketone and ethanol as solvent and polyvinylpyrrlidone (PVP) and polyvinylbutyral (PVB) as dispersing agent and binder, respectively. The suspension is subsequently cast onto a moving substrate and allowed to dry. Sheets in appropriate sizes are cut and sintered at 1500°C for 4 hours. The manufacture of sheets by viscous processing techniques, such as calendering will also be suitable.

### Example 15: The following examples are not part of the invention.

The use as interconnector in a solid oxide fuel cell stack. A composition of Nd_{0.85}Ca_{0.15}Cr_{0.95}W_{0.08}O₃ is manufactured by the glycine nitrate powder method as described in Example 2.

The interconnect layer is applied on to the anode or cathode by air driven spraying of a suspension of the multi-phase powder. The suspension of the multi-phase system is based on a methyl ethyl ketone/ethanol solvent and polyvinylpyrrolidone (PVP) dispersing agent and polyvinyl butyral (PVB) binder. The organic system could also be based on other components. The interconnector layer is sintered at 1450°C for 4 hours. Other application techniques, such as serigraphy or plasma spraying are also suitable.

### Example 16:

The use as electrode material in an electrochemical solid oxide fuel cell.

A composition of La_{0.8}Sr_{0.2}Cr_{0.95}Mn_{0.15}O₃ is manufactured by the glycine nitrate powder method as described in Example 2.

An electrode consisting of one or more layers is applied to the electrolyte by air driven spraying of a suspension of the multi-phase powder. The suspension of the multi-phase system is based on an ethanol/methyl ethyl ketone solvent, polyvinylpyrrolidone (PVP) dispersing agent and polyvinyl butyral (PVB) binder. The organic system could also be based on other components. The electrolyte is subsequently sintered at 1400°C for 2 hours.

Other application techniques, such as serigraphy or plasma spraying are also suitable.

### Example 17:

The use as conducting contact layer, for instance between electrodes and interconnector in a solid oxide fuel cell stack. Particularly between the anode and interconnector.

A composition of La_{0.9}Sr_{0.1}Cr_{0.95}Mg_{0.1}Co_{0.07}O₃ is manufactured by the glycine nitrate powder method as described in Example 2.

The contact layer consists of one or more layers applied to the electrode by air driven spraying of a suspension of the multi-phase system. The suspension of the multi-phase system is based on an ethanol/methyl ethyl ketone solvent and polyvinylpyrrolidone (PVP) dispersing agent and polyvinyl butyral (PVB) binder. The organic system could also be based on other components. The contact layer may be used in the as applied state or may be sintered prior to service. Other application techniques, such as serigraphy, plasma spraying or tape casting are also suitable. Also the manufacture of sheets by viscous processing techniques, such as calendering will be suitable.

### Example 18:

The use as protective conducting coating on alloys for high temperature service e. g. as interconnector in solid oxide fuel cells.

A composition of La_{0.9}Sr_{0.1}Cr_{0.95}Mg_{0.1}Co_{0.07}O₃ is manufactured by the glycine nitrate powder method as described in Example 2.

A foil of Fe50Cr50 alloy is surface-etched by HF and a suitable layer of the multiphase system is subsequently deposited by plasma spraying. Also, the manufacture of coatings by for instance sol-gel technique will be suitable.

### Example 19:

The use as heating element for use in high temperature furnaces exposed to variations in oxygen partial pressure.

A composition of Nd_{0.85}Ca_{0.15}Cr_{0.95}W_{0.08} O₃ is manufactured by the glycine nitrate powder method as described in Example 2. The heating elements are manufactured by injection moulding and sintered at 1450°C for 2 hours. Other manufacturing techniques such as powder pressing are also suitable.

### Example 20:

The use of ceria based materials as an oxidation catalyst for oxidation of for instance hydrocarbons, carbons (e.g. soot in diesel engine exhausts), sulphur and sulphur containing materials.

Ceria based oxidation catalysts are very effective oxidation catalysts for a variety of oxidation reactions. The problem associated with the cerias are in this context that the material will disintegrate to nano-sized powders by continued oxidation and reduction as a result of the associated volume changes. Such nano-sized powders will easily be blown out of the catalytic reactor by the gas streams. Using the present invention, such disintegration may be avoided or at least alleviated as in the following Example.

Ceria, CeO₂, doped with about 5 mol % gadolinia, Gd₂O₃, is also doped with nominally about 15 mol % SrO and about 5 mol % TiO₂. The material may be syntizised using the method described in Example 2. After sintering at about 1500°C and annealing at 1000°C, the material consists of three phases, namely the fluorite main phase (ceria with SrO and Gd₂O₃ in solid solution), a small amount of perovskite, Sr(Gd,Ce)TiO₃, and a small amount of TiO₂. The fluorite will expand through reduction, but this will be counteracted by two effects: 1) the Sr(Gd,Ce)TiO₃ unit cell will contract upon reduction, and 2) Sr²⁺, and some of the Ce³⁺ formed by the reduction will react with TiO₂ to form more Sr(Gd,Ce)TiO₃ type of perovskite. This reaction is driven by an increasing saturation of the fluorite lattice with the big ions Ce³⁺ and Sr⁺ when more and more Ce³⁺ is formed by the increasing reduction. The volume of the fluorite is larger than the corresponding volume of the perovskite.

### Example 21:

Doped ceria has a specific electrical conductivity, which is only dependent on the oxygen partial pressure, pO₂, at a given temperature. This makes it a potential material for measurement of pO₂, i. e. for use as an oxygen sensor at low oxygen partial pressures at elevated temperature using the simple principle of measurement of an electrical resistance. Ceria has the advantage of being chemically very stable in aggressive atmospheres. The problem of using ceria for this purpose is the expansion on reduction, which will cause disintegration of the material, and thus make the measurement of the conductivity impossible. Using the present invention, such disintegration may be avoided or at least alleviated as in the following Example.

Ceria, CeO₂, doped with about 5 mol % gadolinia, Gd₂O₃, is also doped with nominally about 15 mol % SrO and about 5 mol % TiO₂. The material may be syntizised, using the method described in Example 2. After sintering at about 1500°C and annealing at 1000°C, the material consists of three phases, namely the fluorite main phase (ceria with SrO and Gd₂O₃ in solid solution), a small amount of perovskite, Sr(Gd,Ce)TiO₃, and a small amount of TiO₂. The fluorite will expand on reduction, but this will be counteracted by two effects: 1) the Sr(Gd,Ce)TiO₃ unit cell will contract upon reduction, and 2) Sr⁺, and some of the Ce³⁺ formed by the reduction will react with TiO₂ to form more Sr(Gd,Ce),TiO₃ type of perovskite. This reaction is driven by an increasing saturation of the fluorite lattice with the big ions Ce³⁺ and Sr²⁺ when more and more Ce³⁺ are formed by the increasing reduction. The volume of the fluorite is larger than the corresponding volume of the perovskite.

### Example 22:

The use as oxygen separation membranes, for Example for production of oxygen, of materials of the type Ln₁₋ₓAeₓTm_{1-y}Sp_{y+r}O_{3±δ}, where Ln is one of or a combination of the lanthanides, Ce, Pr, ...Lu or Y, Ae is an alkaline earth, Ca, Sr or Ba or a combination, Tm is a transition metal or Ga, In or Al, or a combination of such elements and Sp is the element added to form a secondary phase being either V, Nb, Ta, Bi, Sb, Fe, Mn, Ti, Cr, W, Sn and Pb. 0 < x < 1, 0.001 < y < 0.3 and 0 < r < 0.-2.

Preferred are cobaltites (Tm=Co), where the Sp=V, Nb, Mo, Mn or Cr or specifically the material La_{0.4}Sr_{0.65}CoCr_{0.1}Ox.

The material is synthesised by the glycine route, the Pechini method or via the mixed oxides route as described in Example 2.

The membrane may be in the form of a bulk ceramics in plate-like or tube-like shape, prepared by extrusion, tape casting, injection moulding or viscous processing, or in the form of a thin coating (1-100 µm) manufactured on a support by means of a physical deposition technique, such as plasma or flame spraying, CVD or MOCVD, or via a wet ceramic process such as co-casting, co-extrusion, spray painting or screen printing.
In case of bulk plat-like geometries, the manufacturing route is described under Example 14.

### Example 23 :

Use as oxygen separation membrane in a membrane reactor for production of synthesis gas of the material La_{0.4}Sr_{0.6}Fe_{0.8}Ga_{0.2}V_{0.1}Oₓ

The material is synthesised by the routes described in Example 2. The membrane reactor may be manufactured as described in Example 22.

### Example 24:

Use as oxygen separation membrane in a membrane reactor for production of synthesis gas of the material of nominal composition La_{0.2}Sr_{0.9}FeCo_{0.15}O_{x.} The expansion on reduction of the main perovskite phase is here conterbalanced by the reduction of small amounts of the secondary phase Sr₄Fe₄Co₂O_{y}, which has a layered perovskite related structure, to the more dense perovskite SrFe₁₋ₛCoₛO_{3-δ} and Fe₁₋ₛ₂Coₛ₂O.

The material is synthesised by the routes described in Example 2. And the membrane reactor may be manufactured as described in Example 22.

### Example 25:

Use as oxygen separation membrane in a NOₓ-free burner, i. e. a membrane reactor designed for full oxidation of a fuel without exposure to air, of the material La_{0.5}Sr_{0.6}Fe_{0.6}Cr_{0.4}Nb_{0.15}Oₓ.

The material may be synthesised by the routes described in Example 2. And the membrane reactor may be manufactured as described in Example 22.

### Example 26:

Use as oxygen separation membrane in a membrane reactor designed for oxidative coupling of methane for production of C2 species (ethylene and ethane) of the material La_{0.4}Sr_{0.6}Co_{0.8}Fe_{0.2}W_{0.12}Oₓ.

The material may be synthesised by the routes described in Example 2. And the membrane reactor may be manufactured as described in Example 22.

### Example 27:

Use as oxygen separation membrane, for Example for production of oxygen, of the material La_{0.4}Sr_{0.65}CoMo_{0.15}Oₓ.

The material is synthesised by the glycine route, the Pechini method or via the mixed oxides route as described in Example 2, and the membrane reactor may manufactured as described in Example 22.

## Claims

1. Electronically conducting or mixed ionic and electronically conducting material in the form of a multi-phase system comprising at least two phases, **characterised by** the multiphase system comprising a main phase of non-stochiometric oxide of, for instance alkaline earth doped lanthanum chromite, a material of the type III-III and one or more secondary phases, which change phase in response to the oxygen partial pressure, said main phase being a perovskite phase and consisting of La₁₋ₓMaₓM_{1-y}V_{y+r}O_{3±δ,} where Ma is Sr, and M is one or more elements belonging to the transition metals like e.g. Sc, Ti, V, Mn, Cr, Fe, Co, Ni, Cu, Zn, Y, Zr, Nb, Mo, Ru, Rh, Hf, Ta, W, Re and Os as well as Mg, Al, Ga, In, Ge, Sn, Pb, Bi and Sb, 0.3 > x > y, r > 0 and y < 0.3, and said secondary phases for instance consisting of combinations of oxides of V, Sr, La and Cr.

2. Material according to claim 1, **characterised by** the secondary phase being optimised by means of one or more oxides of elements such as V, Nb, Ta, Cr, Mo, W, Bi; Sb, Pb, Mg, Sr, Ca, Ba, Zr, Sn, Fe, Y, Sc, Cu, Zn, Nb or other rare earth elements.

3. Material according to claim 1, **characterised by** the multi-phase system comprising La₁₋ₓMaₓCr_{1-y-z}Mg_{z}V_{y+r}O_{3±δ}, where Ma is Sr, and 0.3 > x+z > y, r > 0 and δ near 0 and y < 0.3, especially y < 0.25, in particular 0.03 < y < 0.2.

4. Material according to claim 1, **characterised by** the multi-phase system comprising a main perovskite phase La₁₋ₓMaₓFe_{1-y-z}Mg_{z}V_{y+r}O_{3±δ}, where Ma is Sr and 0.3 > x + z > y, r >0 and δ near 0, and y < 0.3, especially y < 0.25, in particular 0.03 < y < 0.2.

5. Material according to claim 1 used in a protecting coating.

6. Material according to claim 1 used as a heating element.

7. Material according to claim 1 used as a contact layer.

8. Material according to claim 1 used as a membrane.

9. Material according to claim 1 used as a SOFC interconnector.

## Patentansprüche

1. Elektronisch leitendes oder gemischtes ionisches und elektronisch leitendes Material in der Form eines Multiphasen-Systems, umfassend wenigstens zwei Phasen, **dadurch gekennzeichnet, daß** das Multiphasen-System eine Hauptphase eines nicht-stöchiometrischen Oxids eines Materials des Typs III-III, z.B. Lanthanchromit, das mit Erdalkali gedopt ist, und eine oder mehrere sekundäre Phasen umfaßt, die ihre Phase in Antwort auf den Sauerstoffpartialdruck verändern, wobei die Hauptphase eine Perowskit-Phase ist und aus La₁₋ₓMaₓM_{1-y}V_{y+r}O_{3±δ} besteht, wobei Ma Sr ist, und M ein oder mehrere Elemente ist, das zu den Übergangsmetallen gehört, wie etwa z.B. Sc, Ti, V, Mn, Cr, Fe, Co, Ni, Cu, Zn, Y, Zr, Nb, Mo, Ru, Rh, Hf, Ta, W, Re und Os ebenso wie Mg, Al, Ga, In, Ge, Sn, Pb, Bi und Sb, 0,3 > x > y, r > 0 und y < 0,3, und wobei die sekundären Phasen zum Beispiel aus Kombinationen von Oxiden von V, Sr, La und Cr bestehen.

2. Material nach Anspruch 1, **dadurch gekennzeichnet, daß** die sekundäre Phase mittels einem oder mehreren Oxiden von Elementen, wie etwa V, Nb, Ta, Cr, Mo, W, Bi, Sb, Pb, Mg, Sr, Ca, Ba, Zr, Sn, Fc, Y, Sc, Cu, Zn, Nb oder anderen Seltene-Erden-Elementen optimiert worden ist.

3. Material nach Anspruch 1, **dadurch gekennzeichnet, daß** das Multiphasen-System La₁₋ₓMaₓCr_{1-y-z}Mg_{z}V_{y+r}O_{3±δ} umfaßt, wobei Ma Sr ist, und 0,3 > x+z y, r > und δ nahe 0 und y < 0,3, insbesondere y < 0,25, insbesondere 0,03 < y < 0,2.

4. Material nach Anspruch 1, **dadurch gekennzeichnet, daß** das Multiphasen-System eine Haupt-Perowskit-Phase La₁₋ₓMaₓFe_{1-y-z}Mg_{z}V_{y+r}O_{3±δ} umfaßt, wobei Ma Sr ist, und 0,3 > x + z > y, r > und δ nahe 0 und y <0,3, insbesondere y <0,25, insbesondere 0,03 < y < 0,2.

5. Material nach Anspruch 1, das in einer Schutzbeschichtung verwendet wird.

6. Material nach Anspruch 1, das als ein Heizelement verwendet wird.

7. Material nach Anspruch 1, das als eine Kontaktschicht verwendet wird.

8. Material nach Anspruch 1, das als eine Membran verwendet wird.

9. Material nach Anspruch 1, das als ein SOFC-Interconnector verwendet wird.

## Revendications

1. Matériau conducteur d'électrons ou matériau mixte conducteur d'électrons et d'ions sous la forme d'un système à plusieurs phases comprenant au moins deux phases, **caractérisé en ce que** le système à plusieurs phases comprend une phase principale d'oxyde non stoechiométrique composée, par exemple, d'une chromite de lanthane dopée avec un oxyde d'alcalino-terreux, un matériau de type III-III, et une ou plusieurs phases secondaires, qui changent de phase en réponse à la pression partielle en oxygène, ladite phase principale étant une phase pérovskite et constituée par La₁₋ₓMaₓM_{1-y}V_{y+r}O_{3±δ}, où Ma est Sr, et M est un ou plusieurs éléments appartenant aux métaux de transition comme, par exemple, Sc, Ti, V, Mn, Cr, Fe, Co, Ni, Cu, Zn, Y, Zr, Nb, Mo, Ru, Rh, Hf, Ta, W, Re et Os ainsi que Mg, Al, Ga, In, Go, Sn, Pb, Bi et Sb, 0,3 > x> y,r >0 et y < 0,3, et lesdites phases secondaires sont, par exemple, constituées de combinaisons d'oxydes de V, Sr, La et Cr.

2. Matériau selon la revendication 1, **caractérisé en ce que** la phase secondaire est optimisée au moyen d'un ou de plusieurs oxydes d'éléments tels que V, Nb, Ta, Cr, Mo, W, Bi, Sb, Pb, Mg, Sr, Ca, Ba, Zr, Sn, Fe, Y, Sc, Cu, Zn, Nb ou d'autres terres rares.

3. Matériau selon la revendication 1, **caractérisé en ce que** le système à plusieurs phases comprend La₁₋ₓMaₓCr_{1-y-z}Mg_{z}V_{y+r}O_{3±δ}, où Ma est Sr, et 0,3 > x+z > y,r >0 et δ est proche de zéro et y < 0,3, plus particulièrement y < 0,25, en particulier 0,03 < y < 0,2.

4. Matériau selon la revendication 1, **caractérisé en ce que** le système à plusieurs phases comprend une phase pérovskile principale La₁₋ₓMaₓFe_{1-y-z}Mg_{z}V_{y+r}O_{3±δ}, où Ma est Sr, et 0,3 > x+z> y,r >0 et δ est proche de zéro, et y < 0,3, plus particulièrement y < 0,25, en particulier 0,03 < y < 0,2.

5. Matériau selon la revendication 1 utilisé dans un revêtement protecteur.

6. Matériau selon la revendication 1 utilisé en tant qu'élément chauffant.

7. Matériau selon la revendication 1 utilisé en tant que couche de contact.

8. Matériau selon la revendication 1 utilisé en tant que membrane.

9. Matériau selon la revendication 1 utilisé en tant qu'interconnecteur pour SOFC.
